Europäisches Patentamt

European Patent Office

Office européen des brevets

(11) Publication number: **0 433 538 A2**

# EUROPEAN PATENT APPLICATION

(21) Application number: 90110583.3

(51) Int. Cl.5: **G01S 5/16**

(22) Date of filing: **05.06.90**

(30) Priority: **22.12.89 IT 8500989**

(43) Date of publication of application:
**26.06.91 Bulletin 91/26**

(84) Designated Contracting States:
**AT BE CH DE DK ES FR GB GR IT LI LU NL SE**

(71) Applicant: **U.P.F. di Zanieri Ugo Pietro**
**Via Calatafimini 26**

**I-50137 Firenze(IT)**

(72) Inventor: **Lo Sapio, Giovanna**
**Via Palazzina 70**
**I-37138 Verona(IT)**

(74) Representative: **Petraz, Gilberto Luigi**
**GLP S.r.l. Piazzale Cavedalis 6/2**
**I-33100 Udine(IT)**

(54) **Optic-electronic telemetry device with variable base.**

(57) Optic-electronic telemetry device suitable for determining, on the basis of informations of angular measurements supplied by two independently mobile and mutually cooperating units, of reception or transmission respectively in predetermined bands of frequency, the spatial position of a third unit, respectively of transmission or reception in the same frequency bands, relative to the same known references in space and time, characterized in that each of said two independent units is provided with first means for aiming and keeping aimed on said third unit, in that said two units are connected by means of second means of information exchange in real time and in that said device comprises third means for processing data of angular measurements in real time or in predetermined time and controlling the movement of said first means of aiming.

Fig. 2

## OPTIC-ELECTRONIC TELEMETRY DEVICE WITH VARIABLE BASE

The present invention relates to a device essentially constituted by two sources of information, delivering angular indications, which are independent and mutually cooperating (i.e., as a practical form of embodiment, two directive passive sensors with two degrees of freedom in azimuth and elevation), by a connection between these and by a digital electronic computer for the univocal determination in real time of target position in order to fulfil the following functions:

a) aid to aerial navigation, expecially in difficult operative phases, for friendly targets;

b) resistance to hostile targets by the most appropriate means.

This device has its main application in the aeronautical field.

Furthermore, the invention refers to a device essentially contituted by two units, which may receive or transmit signals in a visible or infrared or ultraviolet range of frequencies or in hertzian waves in a millimetric band, with a variable, but known, distance and with the same spatial and temporal references, said units being connected to a digital electronic computer calculating, in real time, the result obtained by the triangulation with a third unit, which is a source of energy or, respectively, a receiving unit, determining in this way two angles of each of said first two units relative to said references.

This device has its main application in the field of the regulation and control of the vehicle traffic.

It is known that the civil aerial navigation has some more difficult operating phases and, among these, are the approach to the landing runway and the landing phases.

Presently, the final approaching phase to the landing strip takes place by a radio-assisted guide.

The pilot guides the airplane according to the indications coming by radio from the control-tower; these indications contain attitude variations of the aircraft following the manual commands carried out by the pilot.

The indications suggested by the flight controller are transmitted via voice, on a radio carrier, and drawn from the information of the landing radar system.

However, it is known that aircraft pilots, expecially in third world countries, may encounter several difficulties, which are either linked to a bad or failed functioning of earth instrumentation caused by logistic negligence problems, or to problems due to a lack of personnel preparation, or to misunderstandings or noise.

Furthermore, it is known that in order too carry out an effective resistance to hostile targets the precise position of these should be determined; more particularly, the distance between the attacking targets and the computing and firing centres should be accurately determined.

This is especially true in the case where artilleries and/or missiles of different kind and range are used.

In the first case, the range measurements are essential for computing the present target point, for its kinematics and, successively, for the ballistic calculation in order to obtain a good weapon performance.

Nowadays, systems are known which carry out a calculation of the future point (impact point) by means of estimated target data (one or more), according to different forms of embodiment.

Although these systems often comprise devices which aid the tracking of the target, they have very little chance of hitting a target especially if it is an airplane attacking in real conditions.

In the second case, the range measurements are very useful for determining the possibility of engaging the target and for fixing the optimum missile launching moment, based on the target and missile characteristics.

It is known that the first distance measuring systems have been the optical telemeters with telemetry base as long as a few meters.

It is also known, that after World War II radars were introduced which are nowadays widely adopted by the well-developed countries for defending the most important targets.

It is finally known that, on a more recent date, laser range-finders have been introduced, which are generally used in tanks against enemy tanks, but also in antiaircraft systems and against surface targets.

The limitations of the optical telemeters, which have now disappeared, for the functions mentioned above, were a consequence of the mechanical constraints for the required precision.

Moreover, they have only a low repetition rate of ranging and are not suitable for flexible installation.

Said range-finders had a telemetry base of about 1 m in portable systems in applications aganist aerial and surface targets and up to about 10 m against surface and aerial targets for fixed systems or systems located on ships.

Radar range-finders have some drawbacks and disadvantages, since they are complex and highly sophisticated devices with high construction and maintenance costs, and since they lack precision on determining the aiming line caused by intervening phenomena of displacement of the energetic barycenter of the electromagnetic return beam and by reflections on water surfaces.

Furthermore, the enemy target has the possibility of detecting the radiation and of disturbing the emitting radar in such a way that the latter cannot be used anymore; moreover, the attacking target may launch a missile against the radar, of the kind which are automatically self-guided by the radiations emitted by the radar.

The existing laser range-finders involve drawbacks and disadvantages, since they are extremely dangerous for human eyes (they emit on a wavelength of 1,064 micrometers).

Furthermore, these devices have a range of visibility which is lower than the atmospheric visibility and require personnel with a high degree of technical preparation and experience.

A further drawback is the fact that, in order to avoid range problems, the laser beam must be angularly narrow; thus, it may only be ranged with difficulty on a mobile target.

For the applications concerning a correct and effective use of missiles, it should be noted that, in many instances and, particularly, with short and very short range antiaircraft missiles, there are no devices in existence which allow a good precision in measuring the target distance and, consequently, for deciding the best launching moment in order to effectively face the menace.

The most widely used devices, for said missiles, are an optical reticle stadimetry or a signal derived from the electronics associated to the sensor which, in many instances, is infrared sensitive.

Neither device is very precise, since:

- the first one is inserted in a wide field of view device and implies the knowledge of a dimension of the target, normally the horizontal;
- the second one is widely affected by instantaneous parameters, i.e. speed and silhouette of the target, meteorological conditions and the presence of the sun in the field of view of the IR sensor.

It can also be noticed that an early launching gives rise to high probability of being discovered and, therefore, of being subject to a repressive action by the enemy as a second launching usually takes too long.

It is known that traffic flow on motorways and on high-speed traffic roads is seriously slowed down, expecially in low visibility conditions, by pile-ups which frequently cause huge traffic jams as well as serious damage to the people and vehicles involved.

At present there are no devices in existence that can guarantee automatic operations to avoid these accidents.

In the press, expecially in the specialized sector, a possible future solution is indicated using radar or laser telemetry, but the inherent costs are very high.

Besides which, the unreliability and the dangers of such apparatus preclude wide use on the market.

According to a first form of embodiment of the invention the main purpose of the device, when applied as an aid to aerial navigation, is of constituting an improvement in reliability and reduction in cost compared with the main radar, with the additional advantage of supplying the pilot with the information which, without difficulty, may be adapted to an automatic guidance system.

Furthermore, this solution implies the advantage of using a more widely known technology, which is also safer because it does not provide for active and, moreover, dangerous sensors like radars.

According to a second form of embodiment of the invention, which may be applied for resistance to mobile targets, the main purpose of the device is that of obtaining a remarkable improvement with respect to the results obtainable by the known devices, in the use in defence systems provided with machine-guns and cannons against both aircrafts and surface targets.

The device according to said first and second forms of embodiment allows the computation of the range of the target with a high repetition rate and with a large accuracy in order to be a remarkable aid to navigation of aircraft in critical phases and to be necessary in the resistance to hostile targets.

This is obtained by a device having the features disclosed in claim 1.

The claims dependent on said claim describe advantageous forms of embodiment of the invention.

According to a third form of embodiment of the invention, applicable as an aid to traffic flow, the purpose of the device according to the invention, is that to allow the installation of a so-called anticollision system on high-speed roads for any tipe of vehicle and in relative short times.

This is obtained by a device having the features disclosed in claim 9.

The claims dependent on claim 9 describe advantageous forms of embodiment thereof.

According to a further form of embodiment of the invention, the device comprises a reception or transmission unit of angular measurement and is suitable for determining the spatial position of another unit mobile with respect to the formerin real or known time.

This is obtained by a device having the features disclosed in claim 13.

According to the first and second forms of embodiment of the invention, the optoeletronic telemetry device with variable base is constituted by two tracking stations, each with directive passive sensors for the aiming of the target and with means of movement and/or measuring in direction and elevation, by a connection for the exchange of data between the two stations and by a computer for the computation of the distance of the target on the basis of the distance between the two tracking stations and the angular data of the target which these stations measure and reciprocally transmit.

According to a third form of embodiment of the invention, the device is provided with a couple of continuous or pulsed emitting units in the electromagnetic spectrum in the. visible band, or in the near infrared, in ultraviolet and in the millimetric bands.

These units are placed on the back of the vehicle with an almost fixed distance between them and, in any case so as not to influence the precision of the measurement for the mentioned purposes.

A third unit is placed on the front part of the vehicle and, in particular circustances, assumes the form of a special camera with the sensitive sensor suitable for receiving the wavelengths of the other two units with an adequate field of view without particular technological difficulties.

The device is then completed by a fourth alarm unit which warns the driver of the presence of an obstacle at a certain distance and which may be structured in such a way as to act directly on the braking circuit of the vehicle.

According to a fourth form of embodiment of the invention, the device comprises a single unit for reception and transmission of data mounted on a platform with much higher speed than the target.

As a practical form of embodiment, the receiver is mounted on a mobile platform on an aircrraft and is provided with a stabilization system.

This receiver is kept automatically aimed on a transmitting unit (transmitter) and means of computation of the spatial position of the second mentioned unit supply a precise indication of the spatial position of said other unit, once the first unit mounted on the aircraft has travelled a sufficient distance to obtain a large enough base of triangulation for the pre-established purposes.

The aircraft has autonomous means for the computation of its own spatial position.

It is of course possible to set up a dual configuration with respect to the first one in which the receiving and transmitting units are inverted while, at the same time, fullfilling their purposes.

It may be noted that, in the main seminars which have been recently delivered by US aeronautical and defence experts, nothing has been proposed which makes use of the principles underlying the present invention.

Other advantages and features of the invention will become apparent from reading the following description, of some forms of embodiment of the invention, given as an example, with the help of the figures shown in the attached drawings, in which:

figs 1 and 2    illustrate the way of functioning of the device according to a first and second form of embodiment;

fig.3           is a block diagram of the connection between stations according to a first and second form of embodiment;

fig.4           is a block diagram of the units of each tracking station;

fig.5           illustrates the operative functioning of the first form of embodiment;

fig.6           illustrates the operative functioning of the second form of embodiment;

fig.7           illustrates the way of functioning of a third form of embodiment.

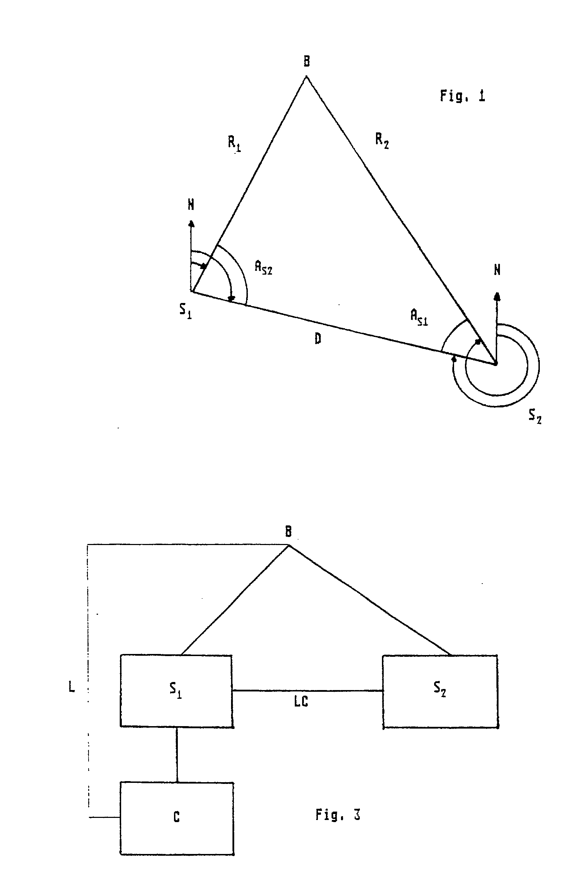

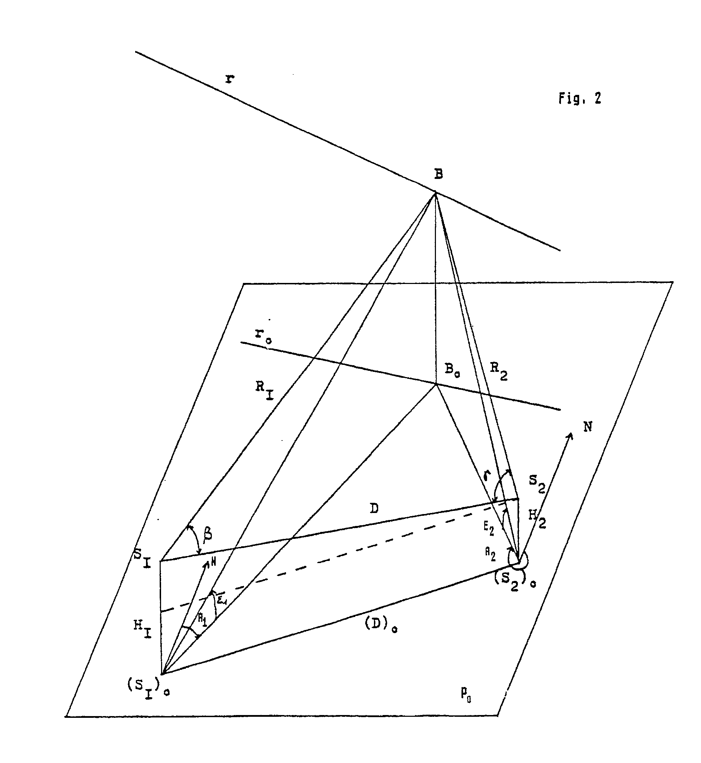

Referring to fig. 1, the principle of functioning of the device according to a first and to a second forms of embodiment of the invention will be described.

These forms of embodiment relate, respectively, to aid to aerial navigation and resistance to a mobile target.

Knowledge of the distance D between the two tracking stations $S_1$ and $S_2$, knowledge of the angles $A_{S1}$ and $A_{S2}$ between the alignment $S_1 S_2$ of the two tracking stations and the lines of sight $S_1 B$ and $S_2 B$ towards the target B enable resolving the triangle $S_1 B S_2$ according to the known geometric formulae as two angles and the base between them are known.

It permits, in particular, the determination of $S_1 B$ and $S_2 B$, which are the distances $R_1$ and $R_2$ of the target B from the tracking stations $S_1$ and $S_2$ respectively.

The state of thee art of the optical, electrical, electronical and mechanical technologies makes it possible to obtain distance information of widely sufficient precision and computation repetition period for the applications to the operative problems underlying the present invention.

Referring to fig. 3, the device according to the invention is constituted by two tracking stations $S_1$ and $S_2$, by a connecting line LC, by a computer C and by a communication and data transmitting line L.

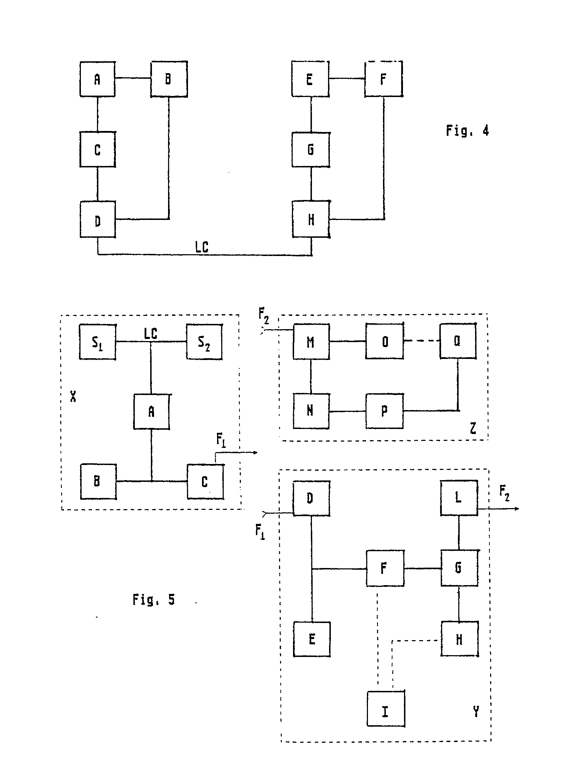

In order to illustrate the device in major detail, and referring to fig. 4, the four essential units comprised in each tracking station will be described.

The tracking station $S_1$ is constituted by:

- a directive passive sensor assembly A, usually constitued by an optical sight provided with suitable opto-geometric characteristics (field of view, magnification, resolution) or by a TV camera day-time or LLL (low light level) - using a normal sensor "target" as for example vidicon, silicon or CCD- or by a IR (infrared) camera using array or matrix sensors - provided with suitable objectives and scanners and functioning in infrared frequency ranges;
- an assembly B, composed of servomechanisms, provided with suitable servotechnical characteristics, and elevation angular sensors;
- an assembly C, composed of servomechanisms, provided with suitable servotechnical characteristics and elevation angular sensors;
- an electronic assembly D, for commanding the tracking station, for engaging and following the target, eventually in an automatic way for facilitating the operator's task, for computing of the distance by means of a microprocessor and for interfacing with the second tracking station and with the operator.

In the particular case of a narrow angle of tracking of the target, assemblies B and C may not exist and direction and elevation angles are supplied by the scanner of the field of view of the passive sensor.

The tracking station $S_2$ comprises four assemblies similar to those described for the station S1 (E similar to A, F to B, G to C, H to D) and performs the same functions.

The two tracking stations have a connection LC which can be realised by a digital line via electrical wires for short distances and a microwave link or an optical-fiber connection for longer distances.

The computation of the range is effected with known geometric formulae applied to triangle $S_1$ B $S_2$ - see fig. 2 - where:

$S_1$ is the first tracking station;
$(S_1)_0$ is its projection on horizontal plane $P_0$;
$H_1$ is the height of $S_1$ relative to $P_0$;
$S_2$ is the second tracking station;
$(S_2)_0$ is its projection on horizontal plane $P_0$;
$H_2T$ is the height of $S_2$ relative to $P_0$;
D is the distance between $S_1$ and $S_2$;
$D_0$ is the distance between $(S_1)_0$ and $(S_2)_0$;
$\beta$ is the angle comprised between the direction $S_1S_2$ (reciprocal collimation direction) and the direction $S_1B$ (collimation direction of $S_2$ with the target);
¥ is the angle comprised between the direction $S_2S_1$ and the direction $S_2B$ (collimation direction of $S_2$ with the target);
N is a reference direction, e.g. geographic or magnetic North;
B is the target position;
$B_0$ is its projection on $P_0$;
r is the target route;
$r_0$ is its projection on $P_0$;
$R_1$ is the target distance from $S_1$;
$R_2$ is the target distance from $S_2$;
$A_1$ is the angle comprised between the reference direction and $B_0$, as seen from $(S_2)_0$ on the plane $P_0$: target direction angle as seen from $S_1$;
$A_2$ is the angle comprised between the reference direction and $B_0$, as seen from $(S_2)_0$ on the plane $P_0$: target direction angle as seen from $S_2$;
$E_1$ is the target elevation angle, as seen from $S_1$;
$E_2$ is the target elevation angle, as seen from $S_2$.

The functioning of the device is described in the following to give a better comprehension.

The target under observation detected with voluntary signals - if friendly and cooperative - or searched for autonomously or by auxiliary means such as optical signals, IRST (infrared search and track) or ultraviolet, radar, acoustic means - if an enemy - is discovered, detected and tracked continuously by two operators possibly aided by automatic trackers.

Since the tracking accuracies are beneath a predetermined threshold, the computer starts computing the range of the target from the two tracking stations and goes on until the operative phase is over.

FORM OF EMBODIMENT I

AID TO NAVIGATION OF AIRPLANES DURING LANDING

Referring to fig. 5, it may be noted that the system comprises an assembly X suitable for detecting the range and angular data of the target and for their most convenient form for the best use from a certain distance; said assembly X is connected to other two assemblies Y and Z, of which:

- the assembly Y performs the function of displaying the data in suitable form for the air traffic controller; moreover it processes the data and transmits them via hertzian-waves, as will be more widely explained in the following pages, to the airplane for displaying them to the pilot;
- the assembly Z performs the function of displaying the data to the pilot and, eventually, the function of extracting suitable signals for automatically piloting the airplane during landing.

The assembly X, which is located close to the landing runway, see fig. 5, top-left corner, performs the function of:

- automatic tracking of the airplane by means of two directive passive sensors, e.g. TV cameras, LLL TV (low light level TV), or FLIR (forward looking infrared), generating a standard video signal. The automatic tracking may be performed, for instance, by means of a video-tracker, and is facilitated by the availability of the range measurement;

- a continuous computation of the aircraft ranges from the two tracking stations $S_1$ and $S_2$ and from the beginning of the runway. The range data is particularly useful for the technical function "Dead reckoning";

- computation of the aircraft silhouette relative to an observer standing at the beginning and at the centre of the runway looking towards the aircraft along an ideal descent path and generation of a synthetic video signal suitable for being displayed to an air traffic control operator in order to check the landing;

- modulation of said video signal with radio frequencies and transmission to the airport instrumentation in order to have it displayed to the air traffic control operator.

Architectonically, and still with reference to fig. 5, the assembly X may be considered as being constituted by the following sub-assemblies:

- sub-assemblies $S_1$ and $S_2$, featuring the use of directive passive sensors. Each tracking station comprises, besides a directive passive sensor which generates a standard video signal, an automatic video tracker, for example of a contrast or edge or correlation type, a servomechanism for elevation axis which includes suitable angular and angular rate of change sensors, a similar servomechanism in azimuth, a platform with two degrees of freedom on which the sensor is installed and a collector for passing the data in electrical form;

- a connection line LC between the two stations $S_1$ and $S_2$ which can be realised with usual technical means, e.g. with a digital line wire or, using the most up-to-date technique, with optical fibres; -a computer A for controlling the directive passive sensors of the two tracking stations, for computing the target aircraft range from the two stations and from the beginning of the landing runway, for computing the aircraft silhouette according to an ideal descent line, as seen from a hypothetical operator standing at the beginning of the runway and for generating a consequent synthetic video signal. This sub-assembly may be realised by means of microprocessor-based computers as, for instance, those which are used in personal computers and having a clock with frequencies in the range of about 20 MHz;

- a video recorder B for documentating the aircraft landing phase;

- a modulator and transmitter at radiofrequency C for transmitting, by hertzian waves, on a carrier $F_1$, said synthetic video signal to the airport instrumentation for being displayed on a monitor of the air traffic control operator.

The assembly Y, which is located in the airport, see fig. 5, bottom-left corner, performs the function of:

- receiving, by means of hertzian waves, on a carrier $F_1$, the synthetic video signal transmitted by the sub-assembly C of the assembly X, extracting the information at videofrequency level in order to eventually record it (by means of a sub-assembly E), and displaying it on a monitor for the air traffic controller who gets the same image as if he were effectively standing at the beginning of the runway. Successively, the computing sub-assembly G generates another synthetic video signal which shows the runway, as seen from the aircraft pilot, according to the information linked to the kinematic parameters of the aircraft and, more particularly, of roll and pitch angles, position and speed. This image is displayed on a monitor H to the air traffic controllers of the airport and, by means of sub-assembly L, it is modulated on a radiofrequency carrier $F_2$ and transmitted to the aircraft.

The assembly Z, which is located within the aircraft, see centre-right portion of fig. 5, performs the function of:

- receiving, by means of a radio at a carrier $F_2$ (which is sufficiently far away from $F_1$ to take account of the band), the video signal generated from the sub-assembly G of assembly Y, by means of sub-assembly M and transferring said signal at a video frequency;

- automatic tracking of a reference point located at the centre of the runway and extracting, by means of sub-assembly N, the commands for automatically operating the aircraft controls actuators, see sub-assembly P. The sinthetic video signal is also displayed on a monitor O to the pilot Q in such a way as he may have the possibility of checking the landing phase and, when necessary, oversiding the device using his cloche.

It may be noted that the invention may comprise a dual application, i.e. in the case where a radar were not present, either be cause of failure, or of operating requirements.

In this case it is possible to carry out the invention by the earth location of two energy transmitting sources, which are respectively located at the sides of the runway.

A receiver is placed within the aircraft and processes, by means of a suitable computer, the angular data received from the earth-located stations.

## FORM OF EMBODIMENT II

### DEFENCE AGAINST ATTACKING ENEMIES

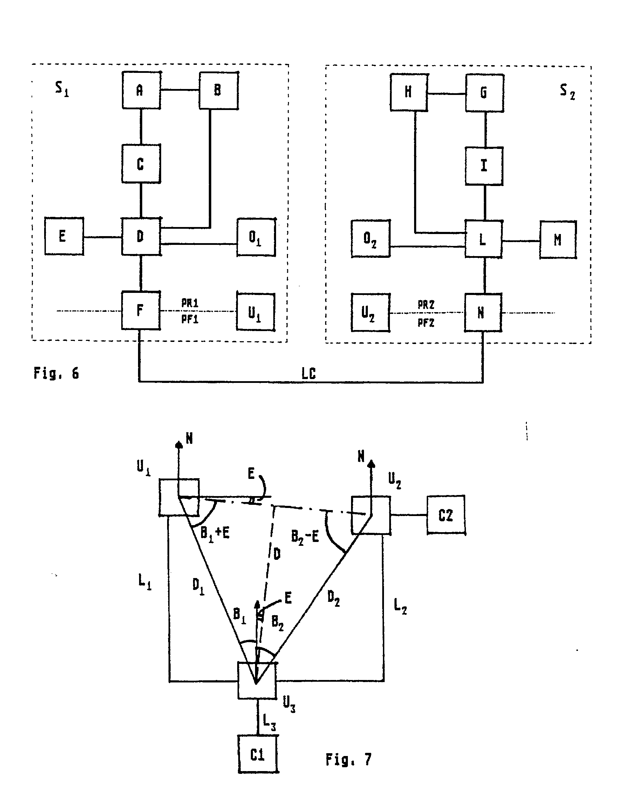

The device is constructed with two tracking stations $S_1$ and $S_2$ including the computer and the connection line LC as illustrated in fig.6.

Each tracking station may be identified, in the present form of embodiment, as mainly constituted by a platform with two degrees of freedom, a directive passive sensor and a computer.

Examining the details of the construction, with reference to fig.6, the device is realised by means of the assemblies indicated by reference signs 1), 2) and 3).

1) A TRACKING STATION $S_1$ COMPRISING:

a) a platform $U_1$ with a fixed part and a rotating part in azimuth and elevation. The mobile part may be placed above the fixed part or vice-versa, depending on the kind of use of the device on board aircraft, such as aeroplanes or helicopters, surface means, such as ships or hovercraft or terrestrial means, cooperating in a common action against a hostile target;

b) directive passive sensor subassembly, for example a TV-camera, see sub-assembly A;

c) servomechanism for the movement, in elevation, of the TV-camera. The servomechanism may be for instance realized by means of a d.c. motor. The subassembly also includes the necessary angular sensors for example synchros, resolvers, potentiometers, tachometers, see sub-assembly B;

d) servomechanism for the movement of the TV-camera in azimuth through the azimuth movement of the rotating part $PR_1$ of the platform $U_1$ on which the directive passive sensor is installed, see sub-assembly C;

e) command and control subassembly comprising, particularly, as well as the essential items for the presetting, commands, operating and functioning signals and the interface with the second station $S_2$, a cloche provided with suitable sensors, for example, potentiometers, at the disposal of the operator for driving the line of sight, see sub-assembly D;

f) unit for computing and interfacing with the second station $S_2$ with which it exchanges the information that is necessary for a correct functioning. The subassembly is mainly composed by an electronic digital computer based on microprocessor unit, having for instance a length of word 16 bit, clock frequency equal or higher than 20 MHz, see sub-assembly E;

g) electric collector for passing the information by means of a wire through the two parts of the platform, see sub-assembly F;

h) target observation subassembly, see sub-assembly $O_1$, consisting, in the most natural form, of a human operator and relative conforts or of an artificial intelligence assembly.

2) TRACKING STATION $S_2$.

The tracking station $S_2$ is similar, in function, to that described in 1 above. The computation sub-assembly M may be considered, on first impression, as redundant in the range computation of the target. In fact, it should be considered, in an operative displacement that foresees the enemy attack from $360°$ direction and therefore $S_1$ and $S_2$ are connected with at least a third station. Moreover, in a practical case, the two computers E and M have the task, without sensible increase in complexity, of computing other functions connected to the weapons e.g. kinematic, ballistic and fire arcs (taboo). Therefore the second computer can take over in case of temporary failure of the first one and viceversa. A greater reliability of the device can therefore be achieved without sensible increase in cost. Another advantage of the second computer connected with the first one is to get a better filtering in the kinematic computing of the target parameters, that is a critical point in fire control systems against mobile targets, particularly, against low level flying aircrafts.

3) CONNECTING LINE LC BETWEEN THE TWO TRACKING STATIONS.

This line, LC in fig. 6, allows, in particular, the first station, that is $S_1$, to receive angular data both in azimuth and elevation from the second station $S_2$ and vice-versa. Practically, the connection can be done easily with a wire, in a digital form according to the well known standards, or by means of a microwave or electro-optical link.

A particularly advantageous form of embodiment is constituted by the case where two aircraft would resist hostile targets.

A directive passive receiver (during the night an infrared receiver) is placed within each aircraft, on a gyrostabilized platform; furthermore, the receivers are connected to the orientation references of the respective aircraft.

An electro-optical link between the two aircraft, with transmitters-receivers on a stabilized platform in reciprocal tracking forms the connection between the two angular data pick-up stations.

The respective on board computers then carry out the computation of the range from the localized hostile target and give information for the most suitable counteraction.

A remarkable form of embodiment of the invention is constituted by both passive sensors being mounted, parallel to each other, on a movable turret, as in the case of vehicles provided with firing systems against surface or aerial targets.

Thus, the sensors are and remain parallel in direction following to the turret movements; the scanning in elevation is also common to both sensors.

In this case the fields of view of both sensors include the same target(s), and the angles necessary for resolving the triangle may be obtained from the electronic (or of other type) scanning devices.

## FORM OF EMBODIMENT III

## AID TO TRAFFIC FLOW

Referring to fig.7, it may be noted that the situation illustrated is dual with respect to those described in relation to the first and the second forms of embodiment.

In fact, in this case the units $U_1$ and $U_2$ are transmitting stations, in the simplest case in the visible or in infrared frequency bands.

In other more complex cases, stations $U_1$ and $U_2$ act with pre-estabilished codes and only within the strictly necessary solid angle, with common spatial and temporal references and with a base (distance between $U_1$ and $U_2$) of limited dynamic.

These stations $U_1$ and $U_2$ are, according to the invention, installed in the rear part of a vehicle and transmit energy towards a direction which is opposite to the direction of movement.

A third unit $U_3$ is installed on the front part of the vehicle and is structured so as to measure the signals coming from the stations $U_1$ and $U_2$ of the vehicle proceeding in front of the vehicle in question.

In this case the positions and references of $U_1$ and $U_2$ are sent to a digital computer based on a microprocessor unit $C_1$ by means of the electro-optical electromagnetic connections L 1 and L 2 (links).

The third unit $U_3$ then determines the angular date of $U_1$ and $U_2$ with respect to the predetermined spatial and temporal references; these data are sent to the computers $C_1$ which, in real time, computes the distances $D_1$ and $D_2$ of the units $U_1$

and $U_2$ from $U_3$ and the distance D of the unit $U_3$ from the axis $U_1 U_2$.

It may be noted that, in a real situation, the unit $U_3$ comprises an optical unit with a certain field of view, an appropiate sensor with relative auxiliary circuits, a scanner for the determination of the azimuth angles of $U_1$ and $U_2$ with respect to the reference N (bearing in mind that $U_1$ and $U_2$ are normally symmetrical, except in the overtaking phase, in which the device is excluded), a data processing unit which regulates the variability of the circuits to match the ambient brightness and a digital computer based on a microprocessor unit $C_1$ which computes the distance from the preceding vehicle and, with the information on the speed of the vehicle on which it is installed, computes the danger of the situation supplying an actuator with information for the activation of an acoustic signal or acting directly on the brakes.

In bends, the distance between $U_1$ and $U_2$, seen from $U_3$, varies, but it is possible to take this into account, from the attitude of the vehicle on which units $U_1$ and $U_2$ are mounted, acting automatically on computers $C_1$ and $C_2$.

The invention has previously been described with reference to three particularly advantageous forms of embodiment.

Nevertheless, it comprises several variants falling within its scope.

Therefore, the invention includes a variant according to which, for example, measurements may be effected of astronomic distances of bodies of particular scientific interest.

The advent of the space age and interplanetary probes whose positions, with respect to Earth, are known with great precision, have created conditions for measurement of the distances of bodies of particular scientific interest with the triangulation system, which is used by this invention.

The time interval between data emission from the probes to Earth stations is known and therefore measurements on the basis of telemetry, although in movement, may be computed with the notable precision necessary for this scientific task.

According to another form of embodiment of the invention, the passive sensors (typically TV or infrared cameras) and suitable viewing apparata are mounted as a rescue means, particularly on a ship, and they are used in searching for shipwrecked persons in the sea. The passive sensors, which are mutually interconnected by means of a suitable computer, determine the precise position of the survivers in order to facilitate the aid operations.

According to a further form of embodiment of the invention the passive sensors (typically TV or infrared cameras) and suitable viewing apparata are connected to a suitable computer for the triangulation and are mounted on a ship. By means of the board instrumentation data, they determine the distance of the ship from the entry of a harbour and they therefore facilitate in a considerable way the entry operations, particularly in the case of large ships or of bad weather conditions.

According to still another form of embodiment of the invention the passive sensors (typically TV or infrared cameras) and suitable viewing apparata are mounted on a surface or aerial unmanned vehicle, which is used for operating in regions which are dangerous or noxious to the man. In this case the passive sensors, besides giving a visible indication from a certain distance, allow the distance of objects in the field of view to be determined, these objects being either obstacles or elements on which a certain operation should be carried out. The so-called RPV (remote piloted vehicles) for aerial reconnaissance or the movable robots for operating in dangerous or noxious environments may be seen as typical examples of this form of embodiment.

According to another form of embodiment of the invention the passive sensors (typically TV or infrared cameras) are used, with suitable viewing apparata, for an indirect vision; in the surgery, this may avoid to open, by means of a lancet, a human body.

Finally, according to another form of embodiment of the invention the passive sensors (typically TV-cameras) are used, in cooperation with a suitable computer for the triangulation and with suitable viewing apparata, as an aid to the referee action in sportive games, particularly in soccer or football, for determining the ball position in respect of the goal line in order to judge about the scoring of a goal.

**Claims**

1. Optic-electronic telemetry device suitable for determining, on the basis of informations of angular measurements supplied by two independently mobile and mutually cooperating units, of reception or transmission respectively in predetermined bands of frequency, the spatial position of a third unit, respectively of transmission or reception in the same frequency bands, relative to the same known references in space and time, characterized in that each of said two independent units is provided with first means for aiming and keeping aimed on said third unit, in that said two units are connected by means of second means of information exchange in real time and in that said device comprises third means for processing data of angular measurements in real time or in predetermined time and controlling the movement of said first means of aiming.

2. Device according to claim 1, characterized in that said first means for aiming and keeping aimed said third unit comprise aiming directive sensors, such as TV cameras, infrared sensors, electromagnetic sensors of angular displacement, as well as angular sensors in azimuth and elevation and means for moving said units in azimuth and elevation.

3. Device according to one of the preceding claims characterized in that said second means of exchange of information in real or pre-established time comprise electric and/or magnetic and/or electromagnetic and/or optic connections.

4. Device according to one of the preceding claims, characterized in that said third means for data processing in real time or in pre-established time comprise an electronic computer based on a microprocessor unit computing the distance of said two units from said third unit on the basis of the distance between said two units and the angular measurements data reciprocally transmitted by said two units.

5. Device according to one of the preceding claims, characterized in that it acts in the visible frequency bands or in the infrared or in the ultraviolet or in the millimetric bands.

6. Device according to one of claims 4 or 5, characterized in that it comprises a second computer connected and cooperating with the first computer.

7. Device according to claim 6, characterized in that at least one of said computers is suitable for kinematic and ballistic computation.

8. Device according to claim 7, characterized in that it also comprises means suitable for generating a synthetic image on the basis of said kinematic and/or ballistic computations.

9. Optic-electronic telemetry device suitable for determining on the basis of information and angular measurements supplied by two independently mobile and mutually cooperating transmitters, in predetermined frequency bands, to a third unit of reception, the spatial position of said two transmitters in the same frequency bands relative to known references and to the third unit, characterized in that said two units are connected at fixed distance or at a distance variable according to a known law and transmit signals in a visible, or infrared, or ultraviolet, or millimetric frequency band, in that said third unit comprises passive directive sensors suitable for detecting the signals coming from said two units and having the same spatial and temporal references as said two units and in that it comprises means for processing the angular measurement data obtained by said passive directive sensors, the said processing means being also connected to auxiliary alarm circuits for the operator of said third unit.

10. Device according to claim 9, characterized in that said data processing means comprise an electronic computer based on a microprocessor unit.

11. Device according to claim 10, characterized in that said two units are mobile according to a known law and their movement is controlled by means of a second electronic computer based on a microprocessor unit.

12. Device according to claim 11, characterized in that said first and second computers are interconnected by means of an electromagnetic connection.

13. Optic-electronic telemetry device suitable for determining, on the basis of angular measurement information supplied by a first transmission or reception unit in predetermined frequency bands, the spatial position of a second unit, mobile with respect to known references, characterized in that said first unit comprises means for aiming and keeping aimed the said second unit and means for processing of angular measurement data in real or in known time and controlling the movement of said means for aiming.

Fig. 1

Fig. 3

11

Fig. 2

Fig. 4

Fig. 5

Fig. 6

Fig. 7